# EUROPÄISCHE PATENTSCHRIFT

(11) **EP 2 746 103 B1**
(45) Veröffentlichungstag und Bekanntmachung des Hinweises auf die Patenterteilung: **14.06.2017**
(21) Anmeldenummer: 13197277.0
(22) Anmeldetag: 13.12.2013
(51) Int. Cl.: B60N 2/015, B60N 2/50, B60N 2/06, B60N 2/08, B60N 2/14, B60N 2/44

(54) **NUTZFAHRZEUGSITZ MIT DOPPELARRETIERBAREM QUERSCHLITTENTEIL**
COMMERCIAL VEHICLE SEAT WITH DOUBLE LOCKABLE CROSS SLIDE MEMBER
SIÈGE DE VÉHICULE UTILITAIRE DOTÉ D'UNE PARTIE DE COULISSEAU TRANSVERSAL À DOUBLE BLOCAGE

(30) Priorität: 18.12.2012 DE 102012112525
(43) Veröffentlichungstag der Anmeldung: 25.06.2014
(73) Patentinhaber: GRAMMER AG, 92224 Amberg (DE)
(72) Erfinder: Haller, Erwin, 92262 Birgland (DE)
(74) Vertreter: Hannke, Christian

(56) Entgegenhaltungen:
- WO-A1-2012/099789
- US-A- 5 076 529
- US-A- 5 161 765
- US-A1- 2010 001 169

## Beschreibung

Die Erfindung betrifft ein Nutzfahrzeugsitz mit einem Sitzteil, mit einem Rückenlehnenteil und mit einem Sitzunterbau zum Anordnen an einem Karosserieteil eines Nutzfahrzeugs, bei welchem der Sitzunterbau eine Querschwingeinrichtung mit einem quer zu der Nutzfahrzeuglängserstreckung schwingbaren Querschlittenteil, mittels welchem zumindest das Sitzteil quer zur Fahrrichtung schwingbar an einem Basisträgerteil des Sitzunterbaus gelagert ist, und eine Verriegelungseinrichtung zum Festlegen des Querschlittenteils an dem Basisträgerteil umfasst.

Gattungsgemäße Nutzfahrzeugsitze sind aus dem Stand der Technik bereits gut bekannt, wobei durch ein quer schwingbares Querschlittenteil der Sitzkomfort für einen Fahrgast in schwerem Gelände verbessert werden soll. Diese Schwingfunktion soll jedoch nicht ständig aktiviert sein, da sie beispielsweise im normalen Straßenverkehr auch hinderlich sein kann, etwa bei schnelleren Kurvenfahrten oder dergleichen, wenn eher ein stabilisierender Halt des Fahrgastes durch den Nutzfahrzeugsitz erforderlich ist. Insofern sind auch entsprechende Verriegelungseinrichtungen zum Festlegen des Querschlittenteils an einem ortsfesten Bauteil eines Sitzunterbaus für den Nutzfahrzeugsitz bekannt. Eine Verriegelung erfolgt hierbei dann meistens schienenintegriert in bzw. an Querschienen einer Querschwingeinrichtung mithilfe das Querschlittenteil an dem ortsfesten Bauteil geführt ist. Ein Hauptproblem hierbei ist jedoch darin zu sehen, dass aufgrund des technisch erforderlichen Spiels zwischen einem Gleitschienenelement und einem Führungsschienenelement der Querschienen, häufig ein kritischer um eine Hochachse rotativer Freiheitsgrad entsteht, infolgedessen ein, wenn auch meist subjektives, Gefühl von Spiel entsteht, wodurch der Nutzfahrzeugsitz um die Hochachse wackelt. Entsprechende Sperrklinken der Verriegelungseinrichtungen werden hierbei über massivere Hebelarme oder über Drahtgestänge angelenkt, wobei auch eine Reihe von Gelenkverbindungen zwischen den einzelnen Bauteilen erforderlich ist. Diese bekannten Lösungen bauen nachteilig somit entsprechend groß und sind aufgrund auch der Vielzahl an beweglichen Bauteilen oftmals wartungsintensiv. Auch bedingt die Vielzahl an gelenkig miteinander verbundenen Bauteilen ein unerwünschtes Spiel in der gesamten Verriegelungseinrichtung. Aus US5161765 A ist ein Sitz mit den Merkmalen der Oberbegriffe der Ansprüche 1 bzw. 11 bekannt. Es ist Aufgabe vorliegender Erfindung, gattungsgemäße Nutzfahrzeugsitze derart weiterzuentwickeln, dass zumindest die vorstehend genannten Nachteile überwunden werden.

Die Aufgabe der Erfindung wird von einem Nutzfahrzeugsitz mit einem Sitzteil, mit einem Rückenlehnenteil und mit einem Sitzunterbau zum Anordnen an einem Karosserieteil eines Nutzfahrzeugs gelöst, bei welchem der Sitzunterbau eine Querschwingeinrichtung mit einem quer zu der Nutzfahrzeuglängserstreckung schwingbaren Querschlittenteil, mittels welchem zumindest das Sitzteil quer zur Fahrrichtung schwingbar an einem Basisträgerteil des Sitzunterbaus gelagert ist, und eine Verriegelungseinrichtung zum Festlegen des Querschlittenteils an dem Basisträgerteil umfasst, wobei die Verriegelungseinrichtung zwei in Nutzfahrzeuglängserstreckung voneinander beabstandet angeordnete Verriegelungseinheiten mit jeweils einem um eine Vertikalschwenkachse schwenkbar oder entlang einer Linearachse verschieblich gelagerten Verriegelungselement aufweist, welche synchron betätigbar in einer Horizontalebene zwischen zwei Querschieneneinheiten der Querschwingeinrichtung angeordnet sind.

Mit der vorgeschlagenen Verriegelungseinrichtung gelingt es, die für eine Festlegung des Querschlittenteils erforderlichen Verriegelungseinheiten konstruktiv einfach und darüber hinaus sehr platzsparend in den Sitzunterbau des Nutzfahrzeugsitzes zu integrieren.

Bei dem vorliegenden Querschlittenteil handelt es sich um einen seitenhorizontalverschiebbaren Querhorizontalschlittenteil, wodurch insbesondere das Sitzteil des Nutzfahrzeugsitzes seitenhorizontalverschiebbar ist. Insofern betrifft die Erfindung entsprechend auch einen seitenhorizontalverschiebbaren Nutzfahrzeugsitz.

Dadurch, dass die Verriegelungselemente der zwei Verriegelungseinheiten in einer Horizontalebene beabstandet voneinander angeordnet sind, gelingt aufgrund einer Doppelverriegelung zudem eine außerordentlich gute spielfreie Festlegung des schwingbaren Querschlittenteils, wobei die Verriegelungselemente für eine Ver- und Entriegelung jeweils um eine Vertikalschwenkachse schwenken und hierdurch besonders flach bauend in den Sitzunterbau integriert werden können. Hierdurch kann nicht nur eine besonders belastbare Verriegelungseinrichtung realisiert werden. Sondern es kann auch die Gesamtsitzhöhe des vorliegenden Nutzfahrzeugsitzes weiter reduziert werden, wodurch entweder mehr Bewegungsfreiheit für einen Fahrgast oder mehr Bauraum für andere Komponenten des Nutzfahrzeugsitzes am Sitzunterbau zur Verfügung stehen.

Insofern handelt es sich bei der vorliegenden Verriegelungseinrichtung im Sinne der Erfindung auch um eine Doppelverriegelungseinrichtung mit einem doppelarretierbaren Querschlittenteil.

Hierbei ist es auch extrem vorteilhaft, dass insbesondere die Verriegelungselemente zwischen zwei Querschieneneinheiten der Querschwingeinrichtung angeordnet sind, so dass der gesamte Bauraum optimal für eine Bauhöhenreduzierung des Sitzunterbaus genutzt wird. Insbesondere ist es vorteilhaft, dass speziell die Verriegelungselemente nicht in den Querschieneneinheiten integriert sind, so dass Letztere einfacher und flacher bauend ausgeführt werden können.

Idealerweise sind die zwei Verriegelungselemente jeweils um eine Vertikalschwenkachse gelagert, wodurch eine Betätigung einfacher bewerkstelligt werden kann. Zudem können die erforderlichen Abmessungen hierbei sehr gering gehalten werden, wenn die Vertikalschwenkachsen der zwei Verriegelungselemente gemeinsam in einer sich in Fahrzeuglängsrichtung erstreckenden Vertikalebene angeordnet sind. Außerdem kann die gesamte Verriegelungseinrichtung hierdurch symmetrisch gebaut werden, was speziell die Anlenkung der Verriegelungselemente sehr vereinfacht.

Die beiden Verriegelungselemente sind somit als um die Vertikalschwenkachse schwenkbare Schwenkhakenplattenelemente ausgestaltet, so dass sie beispielsweise mit einer Grundkörperhöhe von weniger als 10 mm oder 5 mm dementsprechend in ihrer Höhenausdehnung flach bauen.

Die Konstruktion des Sitzunterbaus kann weiter erheblich vereinfacht werden, wenn jedes der Verriegelungselemente durch ein elastisch umlenkbares und ausschließlich auf Zug Betätigungskräfte übertragbares Betätigungselement anlenkbar an dem Querschlittenteil angeordnet ist. Hierdurch kann das jeweilige Betätigungselement ohne jegliche Gelenkverbindungen selbst auf engstem Bauraum umgelenkt werden.

Indem das Betätigungselement ausschließlich auf Zug belastbar ist, kann es in Leichtbauweise bereitgestellt werden. Ausschließlich auf Zug Betätigungskräfte übertragbar bedeutet im Sinne der Erfindung, dass das Betätigungselement keine oder nur vernachlässigbar geringe Druck- und Schubkräfte oder dergleichen aufnehmen und übertragen kann.

Es versteht sich, dass das diesbezügliche Betätigungselement in vielfältiger Gestalt ausgeführt sein kann, um das jeweilige Verriegelungselement beispielsweise aus einer Verriegelungsposition heraus und in eine Entriegelungsposition hinein zu bewegen.

Eine besonders bevorzugte Ausführungsvariante sieht vor, dass die zwei Verriegelungselemente durch ein einziges durchgängiges um ein Umlenkelement eines handbetätigbaren Betätigungshandgriffs umgelenktes Seilzugelement miteinander wirkverbunden sind. Durch dieses Seilzugelement kann die Verriegelungseinrichtung extrem einfach gebaut und raumsparend in den Sitzunterbau und insbesondere zwischen den zwei Querschieneneinheiten untergebracht werden.

Eine kontaktbehaftete Führung des Seilzugelements ist hierbei nur in den Bereichen einer Umlenkung erforderlich. Ansonsten kann es kontaktfrei selbst über längere Wege geführt sein. Aufgrund einer diesbezüglichen Reibflächenreduzierung kann die Verriegelungseinrichtung auch leichtgängiger betätigt werden. Zum kann neben einer Bauteilreduzierung auch eine weitere Gewichtsreduzierung erzielt werden.

Insofern ist es vorteilhaft, wenn die Verriegelungseinrichtung eine entsprechende Seilzugumlenkeinrichtung umfasst, mittels welcher ein einziges Seilzugelement ausgehend von einem ersten der Verriegelungselemente mittels eines Umlenkelements eines handbetätigbaren Betätigungshandgriffs zu einem weiteren der Verriegelungselemente mehrfach umgelenkt ist.

Die Verriegelungseinrichtung kann noch kompakter, insbesondere noch flacher bauen, wenn die Verriegelungselemente, ein diese Verriegelungselemente wirkverbindbares elastisch umlenkbares Betätigungselement, Umlenkelemente einer Umlenkeinrichtung und ein handbetätigbarer Betätigungshandgriff in einer gemeinsamen Horizontalebene angeordnet sind.

Idealweise bewegen sich bei einer Betätigung des handbetätigbaren Betätigungshandgriffs dieses sowie auch die Verriegelungselemente, das diese Verriegelungselemente wirkverbindbare elastisch umlenkbare Betätigungselement und wenigstens einige der Umlenkelemente der Umlenkeinrichtung, wie etwa das Umlenkelement des handbetätigbaren Betätigungshandgriffs in und entlang dieser gemeinsamen Horizontalebene oder zumindest parallel hierzu.

Die Bauhöhe des Sitzunterbaus kann weiter reduziert werden, wenn die Verriegelungselemente zwischen zwei Querschieneneinheiten der Querschwingeinrichtung an dem Querschlittenteil derart angeordnet sind, dass deren Höhenausdehnung in einem durch eine von den Unterseiten der voneinander beabstandet angeordneten Querschieneneinheiten aufgespannte untere fiktive Horizontalebene und durch eine von den Oberseiten der voneinander beabstandet angeordneten Querschieneneinheiten aufgespannte obere fiktive Horizontalebene begrenzten Bauraum angeordnet sind.

Eine Funktionszuverlässlichkeit der vorliegenden Verriegelungseinrichtung kann verbessert werden, wenn ein elastisch umlenkbares und ausschließlich auf Zug Betätigungskräfte übertragbares Betätigungselement federvorgespannt angeordnet ist. Hierdurch steht das Betätigungselement immer unter Spannung und kann somit stets spielfrei bedient werden. Ein diesbezügliches Federelement kann beispielsweise gut durch ein Schraubenfederelement verwirklicht sein.

Als besonders vorteilhaft hat es sich erwiesen, wenn dieses auf Zug Betätigungskräfte übertragbare Betätigungselement durch ein federvorgespanntes Umlenkelement eines handbetätigbaren Betätigungshandgriffs vorgespannt angeordnet ist. Hierdurch kann einerseits gewährleistet werden, dass der handbetätigbare Betätigungshandgriff stets gut positioniert an einer Betätigungskonsole fixiert ist. Andererseits kann somit der Einsatz weiterer Bauteile vermieden werden.

Darüber hinaus ist es auch vorteilhaft, wenn jedes der Verriegelungselemente federvorgespannt an dem Querschlittenteil in Richtung einer Verriegelungsposition wirkend angeordnet ist. Somit kann eine sehr betriebssichere Verriegelung gewährleistet werden, selbst wenn größere fahrsituationsbedingte Schläge auf den Nutzfahrzeugsitz und insbesondere auf die Verriegelungseinrichtung einwirken. Ein entsprechendes Federelement kann besonders flach bauend in die Mechanik eingebunden werden, wenn es sich um ein Schenkelfederelement oder ein flach bauendes Spiralfederelement handelt.

Idealerweise übersteigen die die Verriegelungselemente auf Vorspannung haltenden Vorspannkräfte diejenigen Vorspannkräfte, welche das Betätigungselement straffen, so dass die Verriegelungselemente automatisch stets in der jeweiligen Verriegelungsposition gehalten werden.

Des Weiteren sieht eine vorteilhafte Ausführungsvariante vor, dass die Verriegelungselemente jeweils einen flachen Grundkörper aufweisen, an welchem eine Materialausnehmung zum Einrasten an einem Verriegelungsbolzenelement der Verriegelungseinrichtung vorgesehen ist, wobei die Materialausnehmung an einer Langseite des Grundkörpers angeordnet ist, welche einer durch das Betätigungselement definierten Anlenkseite des Grundkörpers gegenüberliegt.

Idealerweise sind die Verriegelungselemente derart von dem Betätigungselement jeweils angelenkt, dass sie aufeinander zu schwenkbar an dem Querschlittenteil gelagert sind, um die Verriegelungseinrichtung zu entriegeln.

Günstigerweise sind zum Umsetzen der Materialausnehmung und einer Anlenkstelle zum Befestigen des Betätigungselements an dem jeweiligen Verriegelungselement die Langseiten des Verriegelungselements gewählt, da hierdurch bessere Hebeverhältnisse in Bezug auf die jeweilige Vertikalschwenkachse erzielt werden können, was aber nicht zwangsweise bedeutet, dass in einem speziellen Anwendungsfall auch eine Kurzseite des Verriegelungselements heran gezogen werden kann.

Während die Verriegelungselemente als Schwenkhakenelemente ausgestaltet sind, ist es dementsprechend vorteilhaft, wenn jeder der Verriegelungseinheiten ein Verriegelungsbolzenelement zugeordnet ist, welches an dem Basisträgerteil angeordnet ist.

Durch eine derartig gestaltete Verriegelungseinrichtung kann sichergestellt werden, dass die eigentlichen Verriegelungsbauteile, wie eben die Verriegelungselemente und die hiermit korrespondierenden Verriegelungsbolzenelemente direkt an dem Querschlittenteil bzw. an dem Basisträgerteil wirkend angeordnet sind, wodurch eine äußerst robuste Verriegelung erzielt werden kann.

Weitere Vorteile, Ziele und Eigenschaften vorliegender Erfindung werden anhand anliegender Zeichnung und nachfolgender Beschreibung erläutert, in welchen beispielhaft ein Nutzfahrzeugsitz mit zwei zwischen zwei Querschieneneinheiten angeordneten Verriegelungseinheiten einer Verriegelungseinrichtung dargestellt und beschrieben ist. In der Zeichnung zeigen:
- Figur 1: schematisch eine perspektivische Ansicht eines Nutzfahrzeugsitzes mit einem eine Horizontalbewegungsvorrichtung umfassenden Sitzunterbau, welche eine Querschwingeinrichtung und eine Verriegelungseinrichtung hierfür aufweist;
- Figur 2: schematisch eine perspektive Ansicht der Horizontalbewegungsvorrichtung des Sitzunterbaus des Nutzfahrzeugsitzes aus der Figur 1;
- Figur 3: schematisch eine Explosionsansicht der Horizontalbewegungsvorrichtung aus den Figuren 1 und 2;
- Figur 4: schematisch eine Unteransicht der an einem Querschlittenteil der Horizontalbewegungsvorrichtung aus den Figuren 1 bis 3 angeordneten Verriegelungseinrichtung;
- Figur 5: schematisch eine Detailansicht zweier Verriegelungselemente der vorliegenden Verriegelungseinrichtung;
- Figur 6: schematisch eine Ansicht einer Umlenkeinrichtung für ein Seilzugelement der vorliegenden Verriegelungseinrichtung;
- Figur 7: schematisch eine Ansicht eines Verlaufs des Seilzugelements der vorliegenden Verriegelungseinrichtung in seiner Einbauform;
- Figur 8: schematisch eine perspektivische Unteransicht eines Basisträgerteils und der an dem dahinterliegend gezeigten Querschlittenteil angeordneten Verriegelungselemente der vorliegenden Verriegelungseinrichtung;
- Figur 9: schematisch eine perspektivische Aufsicht des Querschlittenteils und der an dem dahinterliegenden Basisträgerteil angeordneten Verriegelungsbolzenelemente der vorliegenden Verriegelungseinrichtung;
- Figur 10: schematisch eine teilweise geschnittene Aufsicht auf die verriegelte Verriegelungsvorrichtung; und
- Figur 11: schematisch eine teilweise geschnittene Aufsicht auf die entriegelte Verriegelungsvorrichtung.

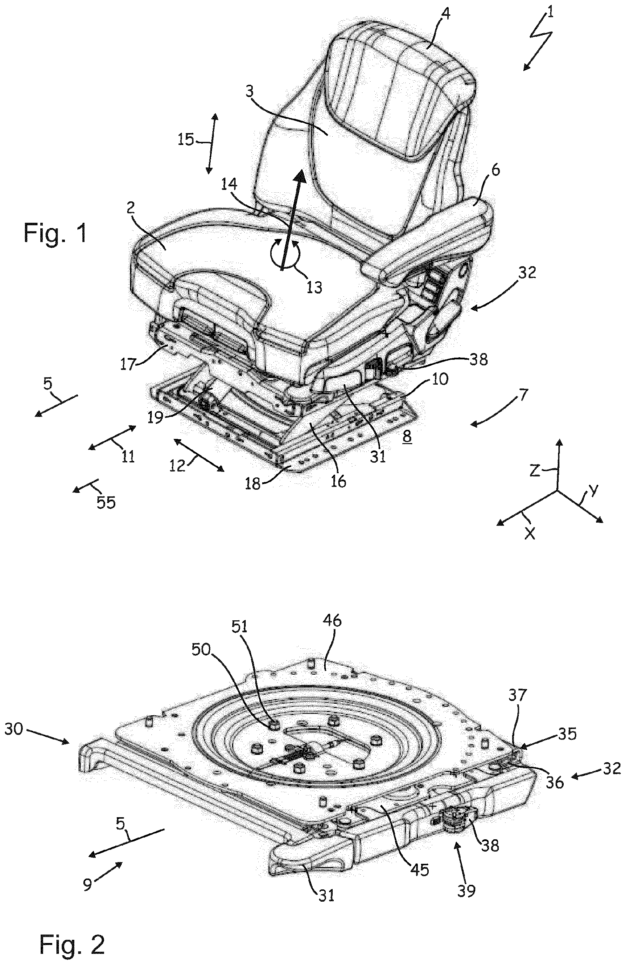

Der in der Figur 1 gezeigte Nutzfahrzeugsitz 1 umfasst ein Sitzteil 2 zum Daraufsitzen eines Fahrgastes und ein Rückenlehnenteil 3 zum rückseitigen Abstützen des Fahrgastes. Das Rückenlehnenteil 3 ist in diesem Ausführungsbeispiel mit einem Kopfstützenteil 4 ausgerüstet. In Vorwärtsfahrrichtung 5 gesehen ist rechts seitlich an dem Rückenlehnenteil 3 zusätzlich auch ein Armlehnenteil 6 befestigt. Des Weiteren umfasst der Nutzfahrzeugsitz 1 noch einen Sitzunterbau 7, mittels welchem der Nutzfahrzeugsitz 1 in seiner Gesamtheit an einem Karosserieteil 8, wie etwa einem Kabinenboden einer Nutzkraftfahrzeugkabine, befestigt ist.

Um den Nutzfahrzeugsitz 1 vielfältig an die unterschiedlichsten Einsatzerfordernisse des Fahrgastes anpassen und auch einen bestmöglichen Sitzkomfort bieten zu können, weist der Sitzunterbau 7 in diesem Ausführungsbeispiel eine Horizontalbewegungsvorrichtung 9 und eine Vertikalbewegungsvorrichtung 10 auf.

Mittels der Horizontalbewegungsvorrichtung 9 kann zumindest das Sitzteil 2 und damit verbundene Bauteile, wie beispielsweise das Rückenlehnenteil 3, translatorisch in Längsverstellrichtungen 11 (x-Achse) und translatorisch in Querschwingrichtungen 12 (y-Achse) sowie rotatorisch in Drehverstellrichtungen 13 um eine Hochachse 14 (z-Achse) bewegt werden, wie nachfolgend noch erläutert ist. Die Horizontalbewegungsvorrichtung 9 besitzt aufgrund ihrer kompakten Bauweise in diesem Ausführungsbeispiel lediglich eine sehr geringe Bauhöhe von 57 mm.

Mittels der Vertikalbewegungsvorrichtung 10 kann zumindest das Sitzteil 2 und damit verbundene Bauteile, wie eben das Rückenlehnenteil 3, translatorisch in Vertikalverstellrichtungen 15 bezüglich der Hochachse 14 bewegt werden. Hierzu umfasst die Vertikalbewegungsvorrichtung 10 ein Scherengestell 16, welches zwischen einer Deckenplatte 17, welche die Horizontalbewegungsvorrichtung 9 trägt, der Vertikalbewegungsvorrichtung 10 und einer Bodenplatte 18 der Vertikalbewegungsvorrichtung 10 derart angeordnet ist, dass die Horizontalbewegungsvorrichtung 9 gegenüber der Bodenplatte 18 vertikal beweglich gelagert ist. Des Weiteren umfasst die Vertikalbewegungsvorrichtung 10 noch eine Dämpfer-Federeinrichtung 19 zum Federn und Dämpfen einer Vertikalbewegung an dem Nutzfahrzeugsitz 1 in Vertikalrichtung 15.

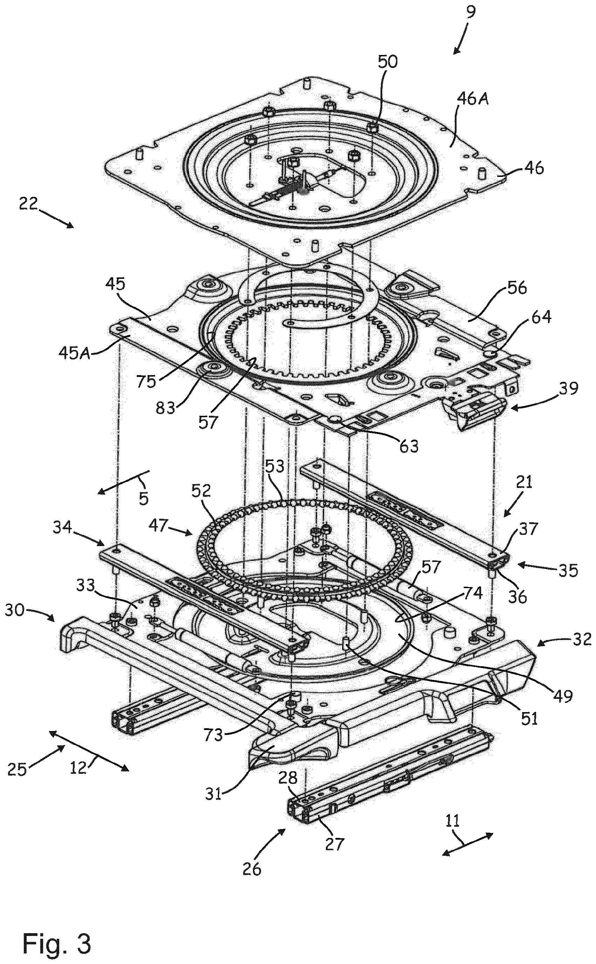

Die insbesondere in den Figuren 2 und 3 näher gezeigte Horizontalbewegungsvorrichtung 9 umfasst eine Längsverstelleinrichtung 20, eine Querschwingeinrichtung 21 und eine Drehverstelleinrichtung 22, um den Nutzfahrzeugsitz 1 im Sinne der vorgenannten Längsverstellrichtungen 11, Querschwingrichtungen 12 bzw. Drehverstellrichtungen 13 bewegen bzw. einstellen zu können. Die Horizontalbewegungsvorrichtung 9 kann in einem anderen nicht minder vorteilhaften Ausführungsbeispiel auch nur eine der Verstell- bzw. Schwingeinrichtungen 20, 21 und 22 oder eine beliebig andere Kombination hiervon aufweisen.

Mittels der Längsverstelleinrichtung 20 kann ein vorderer Längsverstellweg von 120 mm und ein hinterer Längsverstellweg von 90 mm bezogen auf eine Neutrallängsposition erzielt werden, während mittels der Querschwingeinrichtung 21 ein Querschwingweg um eine Neutralquerposition von +/- 25 mm erreicht werden kann. Mittels der Drehverstelleinrichtung 22 kann um die Hochachse 14 herum in 7,5° Schritten jeweils eine Schwenkbewegung von 60° um eine Neutraldrehposition und/oder eine 180°-Drehung erreicht werden.

Die Längsverstelleinrichtung 20 umfasst im Wesentlichen eine rechte Längsschieneneinheit 25 und eine linke Längsschieneneinheit 26 (siehe Figur 3), wobei jede der Längsschieneneinheiten 25, 26 ein Führungsschienenelement 27 (nur exemplarisch beziffert) und ein Gleitschienenelement 28 (ebenfalls nur exemplarisch beziffert) umfasst. Das Führungsschienenelement 27 ist hierbei an der Deckenplatte 17 der Vertikalbewegungsvorrichtung 10 angeschraubt, und damit oberhalb der Vertikalbewegungsvorrichtung 10 zwischen dieser und dem Sitzteil 2 angeordnet.

Darüber hinaus ist der Längsverstelleinrichtung 20 in diesem Ausführungsbeispiel noch eine Doppelarretiereinheit 30 zugeordnet, mittels welcher das jeweilige Gleitschienenelement 28 an dem entsprechenden Führungsschienenelement 27 verriegelbar bzw. entriegelbar ist, so dass der Nutzfahrzeugsitz 1 in der Längsverstellrichtung 11 festgelegt oder bewegt werden kann.

Um die Doppelarretiereinheit 30 durch den Fahrgast manuell betätigen können, umfasst die Längsverstelleinrichtung 11 noch ein händisch betätigbares Greifelement 31, welches seitlich neben dem Sitzteil 2 in einer Betätigungskonsole 32 des Nutzfahrzeugsitzes 1 integriert angeordnet ist.

Die Gleitschienenelemente 28 der Längsschieneneinheiten 25 und 26, die Doppelarretiereinheit 30 und auch das händisch betätigbare Greifelement 31 mit seiner Mechanik sind an einem Basisträgerteil 33 der Horizontalbewegungsvorrichtung 9 befestigt, an welchem ebenfalls Querschieneneinheiten 34 und 35 der Querschwingeinrichtung 21 befestigt sind. Jede der Querschieneneinheiten 34 und 35 weist ein Führungsschienenquerelement 36 und ein Gleitschienenquerelement 37 auf, um eine Bewegung gemäß der Seitenverstellrichtung 12 zu ermöglichen.

In diesem Ausführungsbeispiel ist die Längsverstelleinrichtung 20 unterhalb der Querschwingeinrichtung 21 angeordnet, so dass Erstere zwischen der Querverstelleinrichtung 21 und der Vertikalbewegungsvorrichtung 10 platziert ist.

Das jeweilige Führungsschienenquerelement 36 ist somit mit dem Basisträgerteil 33 verschraubt ist, während das an dem Führungsschienenquerelement 36 entsprechend geführte Gleitschienenquerelement 37 jeweils an einem Unterschalenteil 45 angeordnet ist.

In diesem Ausführungsbeispiel gehört das Unterschalenteil 45 zu der Drehverstelleinrichtung 22 und bildet mit einem entsprechend geformten zweilagigen Oberschalenteil 46 eine Lagerung für eine Wälzkörperlagereinheit 47, welche in diesem Ausführungsbeispiel durch eine Kugellagereinheit verkörpert ist. Unterseitig wird die Kugellagereinheit 47 durch ein Deckelelement 49 komplettiert und geschützt, welches den zweiten Anteil des zweilagigen Oberschalenteils 46 bildet, und mit dessen Hilfe das Unterschalenteil 45, das Oberschalenteil 46 und damit auch die Kugellagereinheit 47 der Drehverstelleinrichtung 22 verspannt werden. Hierzu werden Schraubenmuttern 50 mit entsprechenden Gewindebolzen 51 des Deckelelements 49 verschraubt.

Des Weiteren gestaltet das Unterschalenteil 45 ein drehfestes Schalenfestteil 45A der Drehverstelleinrichtung 22 aus, welches drehfest in dem Sitzunterbau 7 integriert ist, während das vorliegende zweilagige Oberschalenteil 46 entsprechend ein gegenüber dem Schalenfestteil 45A drehbares Schalendrehteil 46A formuliert, welches mithilfe des Deckelelements 49 durch zwei Kugelkranzteile 52 und 53 der Kugellagereinheit 47 an dem Schalenfestteil 45A um die Hochachse 14 drehbar gelagert ist.

Um zumindest das Sitzteil 2 des vorliegenden Nutzfahrzeugsitzes 1 quer zu der Fahrrichtung 5 und damit nämlich auch quer zu der Nutzfahrzeuglängserstreckung 55 schwingen lassen zu können, zeichnet sich die Querschwingeinrichtung 21 noch durch einen quer zu der Nutzfahrzeuglängserstreckung 55 schwingbaren Querschlittenteil 56 aus, dessen Schwingungen noch durch Dämpfer 57 gedämpft werden können. Dieses Querschlittenteil 56 ist durch die beiden voneinander beabstandeten Querschieneneinheiten 34 und 35 entsprechend gegenüber dem Basisträgerteil 33 geführt.

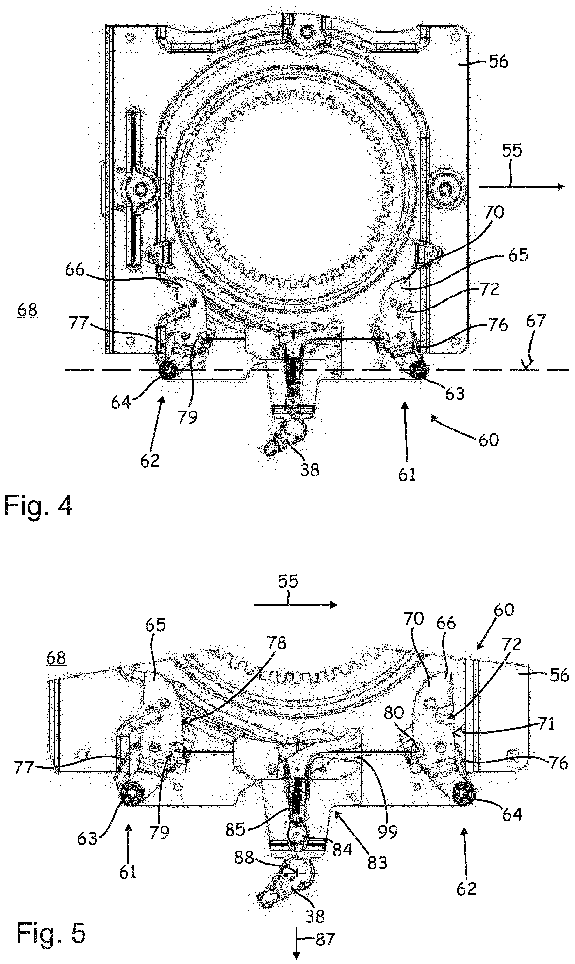

Darüber hinaus verfügt der Nutzfahrzeugsitz 1 noch über eine in den Figuren 4 bis 11 detaillierter gezeigte Verriegelungseinrichtung 60, mittels welcher das Querschlittenteil 56 direkt an dem Basisträgerteil 33 festgelegt werden kann, sollte ein Schwingfunktion nicht gewünscht sein.

Die darüber hinaus in den Figuren 4 bis 11 detaillierter gezeigte Verriegelungseinrichtung 60 zum Festlegen oder zum Lösen der Querschwingeinrichtung 21 besitzt erfindungsgemäß zwei in Nutzfahrzeuglängserstreckung 55 voneinander beabstandet angeordnete Verriegelungseinheiten 61 und 62 mit jeweils einem um eine Vertikalschwenkachse 63 bzw. 64 schwenkbar gelagerten Verriegelungselement 65 bzw. 66.

Diese Verriegelungselemente 65 bzw. 66 sind als Hebelelemente ausgeführt, wie nachstehend noch ausführlich beschrieben ist.

Die beiden Vertikalschwenkachsen 63 und 64 sind parallel zueinander verlaufend in einer gemeinsamen Vertikalebene 67 (nur exemplarisch in Figur 4 eingezeichnet) angeordnet.

Diese Vertikalebene 67 verläuft senkrecht zu einer Horizontalebene 68, in welcher die beiden Verriegelungselemente 65, 66 schwenkbar angeordnet sind, wobei diese Horizontalebene 68 nach der Darstellung gemäß der Figuren 4, 5, 10 und 11 mit der Papierebene zusammenfällt.

Der Begriff "Horizontalebene" ist im Sinne der vorliegenden Erfindung derart zu verstehen, dass diese Ebene sich in Fahrzeugbreitenrichtung und in Fahrzeuglängsrichtung 55 erstreckt und nur dann horizontal ausgerichtet ist, wenn das Nutzfahrzeug sich auf horizontal ausgerichtetem Untergrund befindet. Andernfalls neigt sich diese Ebene mit Neigung des gesamten Nutzfahrzeugs entsprechend der Fahrzeugbreiten- und Fahrzeuglängsrichtung. Gleiches gilt in Bezug auf die Vertikalebene 67.

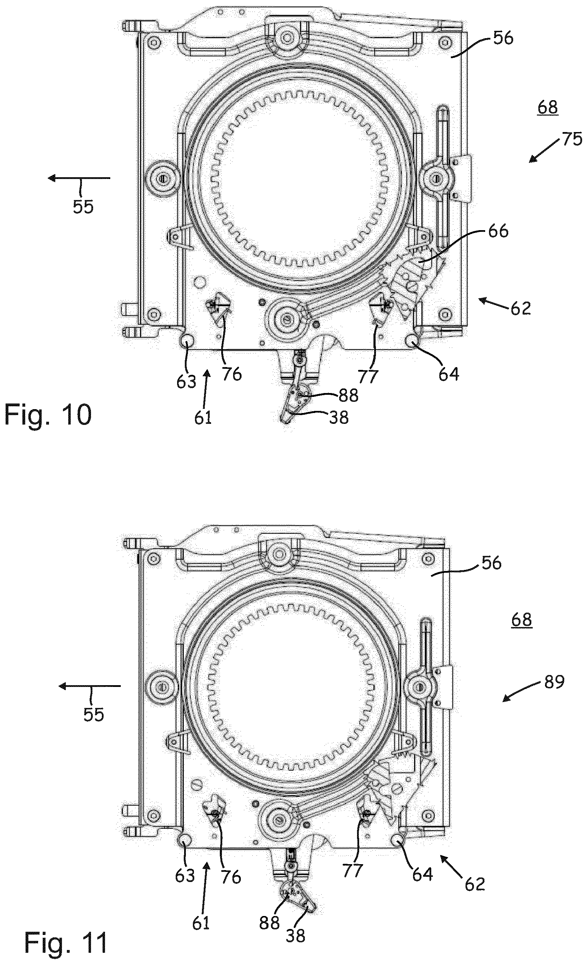

Die werden hierbei durch ein gemeinsames einziges, elastisch umlenkbares und ausschließlich auf Zug Betätigungskräfte übertragbares Betätigungselement 69 um die jeweilige Vertikalschwenkachse 62, 63 bewegt, wenn der Betätigungshandgriff in der Horizontalebene 68 entsprechend manuell nach vorne (siehe Figuren 1, 4, 5 und 10) oder nach hinten (siehe Figuren 2 und 11) umgelenkt wird.

Insofern sind die beiden Verriegelungselemente 65 und 66 synchron betätigbar in der Horizontalebene 68 zwischen den zwei Querschieneneinheiten 34 und 35 der Querschwingeinrichtung 21 außergewöhnlich platzsparend angeordnet.

Hierzu sind die beiden Verriegelungselemente 65 und 66 jeweils aus flach bauenden, etwa fünf Millimeter dicken bzw. hohen Grundkörperscheiben 70 (nur beispielhaft beziffert, siehe Figuren 4 und 5) hergestellt, so dass sie problemlos zwischen den zwei Querschieneneinheiten 34 und 35 Platz finden.

Darüber hinaus sind die Grundkörperscheiben 70 der beiden Verriegelungselemente 65 und 66 jeweils bogenförmig ausgestaltet, wobei an einer ersten Langseite 71 (nur beispielhaft beziffert, siehe Figur 5) der Verriegelungselemente 65 und 66 jeweils eine Materialausnehmung 72 vorgesehen ist, mit welcher jedes der Verriegelungselemente 65 bzw. 66 an einem entsprechenden Verriegelungsbolzenelement 73 bzw. 74 der Verriegelungseinrichtung 60 eingeschnappt ist, wenn sich die Verriegelungseinrichtung 60 und damit auch die Querschwingeinrichtung 21 in einer Verriegelungsposition 75 (siehe Figur 10) befindet.

Damit die Verriegelungselemente 65 bzw. 66 an den Verriegelungsbolzenelementen 73 bzw. 74 immer betriebssicher einschnappen können, umfasst jede der Verriegelungseinheiten 61 und 62 ein Schenkelfederelement 76 bzw. 77.

Während die jeweilige Materialausnehmung 72 an der jeweiligen ersten Langseite 71 der Verriegelungselemente 65, 66 eingearbeitet sind, sind an einer der ersten Langseite 71 gegenüberliegenden Langseite 78 Halterungen 79 zum Haltern des Betätigungselements 69 vorgesehen.

Insofern kann die zweite Langseite 78 als Anlenkseite und die erste Langseite 71 als Verriegelungsseite des jeweiligen Verriegelungselements 65 bzw. 66 bezeichnet werden.

Eine einfache Verbindung zwischen dem elastisch umlenkbaren und ausschließlich auf Zug Betätigungskräfte übertragbaren Betätigungselement 69 und der jeweiligen Halterung 79 des Verriegelungselements 65 bzw. 66 ist vorliegend dadurch erzielt, dass das Betätigungselement 69 an seinen beiden Enden jeweils ein Zylindertonnenelement 80 aufweist, welches in die entsprechende Halterung 79 eingelegt werden kann.

In diesem Ausführungsbeispiel ist das elastisch umlenkbare und ausschließlich auf Zug Betätigungskräfte übertragbare Betätigungselement 69 konstruktiv vorteilhaft durch ein einziges Seilzugelement 81 verwirklicht.

Dieses Seilzugelement 81 ist hierbei mithilfe einer Umlenkeinrichtung 82 von dem ersten der Verriegelungselemente 65 zu dem zweiten der Verriegelungselemente 66 oder umgekehrt geführt.

Die Umlenkeinrichtung 82 verfügt hierbei lediglich über ein Führungskulissenteil 83 und ein Umlenkelement 84 des Betätigungshandgriffs 38, so dass sie vorteilhaft einfach baut.

Das Umlenkelement 84 ist hierbei mittels einer Schraubenfeder 85 an dem Führungskulissenteil 83 derart aufgehängt, so dass das Seilzugelement 81 im Zusammenwirken der Schraubenfeder 85 und den beiden Schenkelfederelementen 76 und 77 immer auf Zug gehalten und damit vorgespannt ist.

Auch hierdurch ist eine spielfreie Betätigung des Betätigungshandgriffs 38 und der gesamten Verriegelungseinrichtung 60 gewährleistet, selbst wenn sich die Verriegelungseinrichtung 60 in der Verriegelungsposition 75 befindet.

Das Umlenkelement 84 ist hierbei an einem Stabelement 86 fixiert, wobei das Stabelement 86 seinerseits exzentrisch an dem Betätigungshandgriff 38 befestigt ist, so dass auch das Stabelement 86 innerhalb der Horizontalebene 68 und in oder entgegen der Spannrichtung 87 (siehe beispielhaft Figur 5) bewegt werden kann, wenn der Betätigungshandgriff 38 entsprechend um eine weitere Vertikalachse 88 gedreht wird.

Hierdurch können die Verriegelungselemente 65 und 66 von der in der Figur 10 dargestellten Verriegelungsposition 75 in eine in der Figur 11 dargestellten Entriegelungsposition 89 wechseln, oder unter zur Hilfenahme der Schenkelfederelemente 76 und 77 umgekehrt.

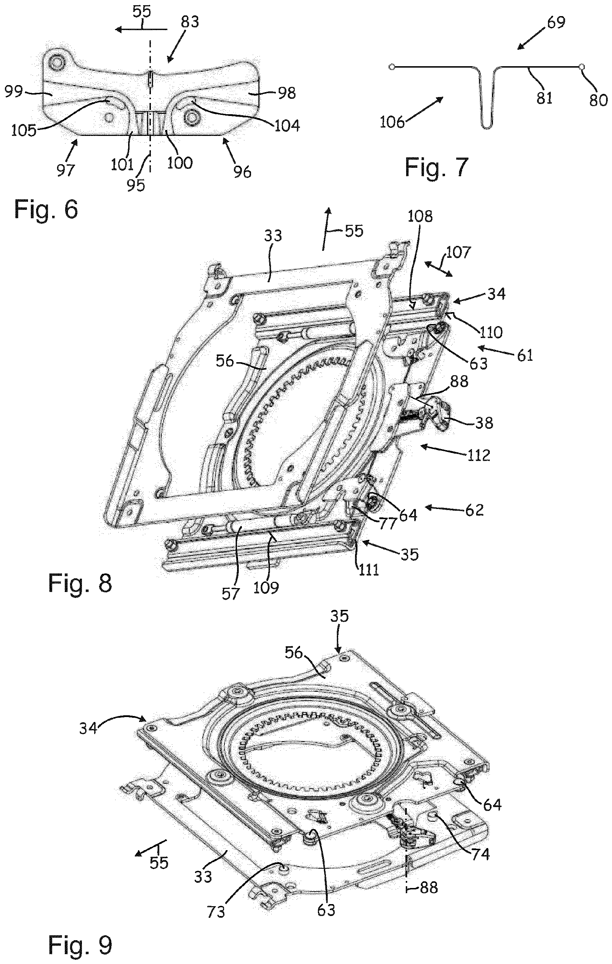

Das in der Figur 6 näher gezeigte Führungskulissenteil 83 zeichnet sich durch jeweils zwei sich hinsichtlich einer Teilungsachse 95 gegenüberliegende Führungsbahnen 96 und 97 aus, mit jeweils einem den Verriegelungselementen 65 und 66 zugewandten Einlaufbereich 98 bzw. 99, wobei sich die beiden Einlaufbereiche 98 und 99 direkt gegenüberliegen.

Darüber hinaus weist das Führungskulissenteil 83 zwei weiteren Führungsbahnen 100 und 101 auf, welche mit ihren Einlaufbereichen 102 und 103 dem Umlenkelement 84 des Betätigungshandgriffs 38 direkt gegenüberliegen.

Die weiteren Einlaufbereiche 102 und 103 sind in der Horizontalebene 68 um 90° gegenüber den Einlaufbereichen 98 und 99 verdreht angeordnet, so dass das einzige Seilzugelement 81 mithilfe zweier Umlenkrundungen 104 und 105 und dem zusätzlichen Umlenkelement 84 gemäß dem in der Figur 7 gezeigten Seilzugverlauf 106 zwischen den beiden Verriegelungselementen 65, 66 und dem Betätigungshandgriff 38 durchgängig und unterbrechungsfrei geführt ist.

Wie insbesondere nach der Darstellung gemäß der Figur 8 gut zu erkennen ist, sind die Verriegelungselemente 65, 66 besonders platzsparend zwischen den zwei Querschieneneinheiten 34 und 35 der Querschwingeinrichtung 21 an dem Querschlittenteil 56 derart angeordnet, dass deren jeweilige Höhenausdehnung 107 in einem durch eine von den Unterseiten 108 und 109 der voneinander beabstandet angeordneten Querschieneneinheiten 34 und 35 aufgespannte untere fiktive Horizontalebene (hier nicht eingezeichnet) und durch eine von den Oberseiten 110 und 111 der voneinander beabstandet angeordneten Querschieneneinheiten 34 und 35 aufgespannte obere fiktive Horizontalebene (hier ebenfalls nicht gezeigt) begrenzten Bauraum 112 angeordnet sind.

Je nachdem, ob es sich bei dem Nutzfahrzeugsitz 1 um einen Fahrersitz oder Beifahrersitz handelt, kann der Aufbau insbesondere des Sitzunterbaus 7 hinsichtlich der x-Achse auch spiegelbildlich ausgebildet sein, sprich: Die Betätigungskonsole 32 und insbesondere das händisch betätigbare Greifelement 31 und der handbetätigbare Betätigungsgriff 38 können anstatt auf der linken Nutzfahrzeugsitzseite auf der rechten Nutzfahrzeugsitzseite angeordnet sein.

### Bezugszeichenliste

- 1: Nutzfahrzeugsitz
- 2: Sitzteil
- 3: Rückenlehnenteil
- 4: Kopfstützenteil
- 5: Vorwärtsfahrrichtung
- 6: Armlehnenteil
- 7: Sitzunterbau
- 8: Karosserieteil
- 9: Horizontalbewegungsvorrichtung
- 10: Vertikalbewegungsvorrichtung
- 11: Längsverstellrichtungen
- 12: Querschwingrichtungen
- 13: Drehverstellrichtungen
- 14: Hochachse
- 15: Vertikalverstellrichtungen
- 16: Scherengestell
- 17: Deckenplatte
- 18: Bodenplatte
- 19: Dämpfer-Federeinrichtung
- 20: Längsverstelleinrichtung
- 21: Querschwingeinrichtung
- 22: Drehverstelleinrichtung
- 25: rechte Längsschieneneinheit
- 26: linke Längsschieneneinheit
- 27: Führungsschienenelement
- 28: Gleitschienenelement
- 30: Doppelarretiereinheit
- 31: Greifelement
- 32: Betätigungskonsole
- 33: Basisträgerteil
- 34: vordere Querschieneneinheit
- 35: hintere Querschieneneinheit
- 36: Führungsschienenquerelement
- 37: Gleitschienenquerelement
- 38: handbetätigbarer Betätigungshandgriff
- 45: Unterschalenteil
- 45A: Schalenfestteil
- 46: Oberschalenteil
- 46A: Schalendrehteil
- 47: Wälzkörperlagereinheit
- 49: Deckelelement
- 50: Schraubenmuttern
- 51: Gewindebolzen
- 52: erstes Kugelkranzteil
- 53: zweites Kugelkranzteil
- 55: Nutzfahrzeuglängserstreckung
- 56: Querschlittenteil
- 57: Dämpfer
- 60: Verriegelungseinrichtung
- 61: erste Verriegelungseinheit
- 62: zweite Verriegelungseinheit
- 63: erste Vertikalschwenkachse
- 64: zweite Vertikalschwenkachse
- 65: erstes Verriegelungselement
- 66: zweites Verriegelungselement
- 67: Vertikalebene
- 68: Horizontalebene
- 69: Betätigungselement
- 70: Grundkörperscheiben
- 71: erste Langseite
- 72: Materialausnehmung
- 73: erstes Verriegelungsbolzenelement
- 74: zweites Verriegelungsbolzenelement
- 75: Verriegelungsposition
- 76: erstes Schenkelfederelement
- 77: zweites Schenkelfederelement
- 78: zweite Langseite
- 79: Halterungen
- 80: Zylindertonnenelement
- 81: Seilzugelement
- 82: Umlenkeinrichtung
- 83: Führungskulissenteil
- 84: Umlenkelement
- 85: Schraubenfeder
- 86: Stabelement
- 87: Spannrichtungen
- 88: weitere Vertikalachse
- 89: Entriegelungsposition
- 95: Teilungsachse
- 96: erste Führungsbahn
- 97: zweite Führungsbahn
- 98: erster Einlaufbereich
- 99: zweiter Einlaufbereich
- 100: weitere erste Führungsbahnen
- 101: weitere zweite Führungsbahn
- 102: weiterer erster Einlaufbereich
- 103: weiterer zweiter Einlaufbereich
- 104: erste Umlenkrundung
- 105: zweite Umlenkrundung
- 106: Seilzugverlauf
- 107: Höhenausdehnung
- 108: Unterseite der vorderen Querschieneneinheit
- 109: Unterseite der hinteren Querschieneneinheit
- 110: Oberseite der vorderen Querschieneneinheit
- 111: Oberseite der hinteren Querschieneneinheit
- 112: Bauraum

## Patentansprüche

1. Nutzfahrzeugsitz (1) mit einem Sitzteil (2), mit einem Rückenlehnenteil (3) und mit einem Sitzunterbau (7) zum Anordnen an einem Karosserieteil (8) eines Nutzfahrzeugs, bei welchem der Sitzunterbau (7) eine Querschwingeinrichtung (21) mit einem quer zu der Nutzfahrzeuglängserstreckung (55) schwingbaren Querschlittenteil (56), mittels welchem zumindest das Sitzteil (2) quer zur Fahrrichtung (5) schwingbar an einem Basisträgerteil (33) des Sitzunterbaus (7) gelagert ist, und eine Verriegelungseinrichtung (60) zum Festlegen des Querschlittenteils (56) an dem Basisträgerteil (33) umfasst, wobei die Verriegelungseinrichtung (60) zwei in Nutzfahrzeuglängserstreckung (55) voneinander beabstandet angeordnete Verriegelungseinheiten (61, 62) mit jeweils einem Verriegelungselement (65, 66) aufweist,
**dadurch gekennzeichnet, dass**
jeweils das Verriegelungselement (65, 66) um eine Vertikalschwenkachse (63, 64) schwenkbar gelagert ist, welche synchron betätigbar in einer Horizontalebene (68) zwischen zwei Querschieneneinheiten (34, 35) der Querschwingeinrichtung (21) angeordnet sind.

2. Nutzfahrzeugsitz (1) nach Anspruch 1,
**dadurch gekennzeichnet, dass**
jedes der Verriegelungselemente (65, 66) durch ein elastisch umlenkbares und ausschließlich auf Zug Betätigungskräfte übertragbares Betätigungselement (69) anlenkbar an dem Querschlittenteil (56) angeordnet ist.

3. Nutzfahrzeugsitz (1) nach Anspruch 1 oder 2,
**dadurch gekennzeichnet, dass**
die zwei Verriegelungselemente (65, 66) durch ein einziges durchgängiges um ein Umlenkelement (84) eines handbetätigbaren Betätigungshandgriffs (38) umgelenktes Seilzugelement (81) miteinander wirkverbunden sind.

4. Nutzfahrzeugsitz (1) nach einem der Ansprüche 1 bis 3,
**dadurch gekennzeichnet, dass**
die Verriegelungselemente (65, 66), ein diese Verriegelungselemente (65, 66) wirkverbindbares elastisch umlenkbares Betätigungselement (69), Umlenkelemente (83, 84) einer Umlenkeinrichtung (82) und ein handbetätigbarer Betätigungshandgriff (38) in einer gemeinsamen Horizontalebene (68) angeordnet sind.

5. Nutzfahrzeugsitz (1) nach einem der Ansprüche 1 bis 4,
**dadurch gekennzeichnet, dass**
die Verriegelungselemente (65, 66) zwischen zwei Querschieneneinheiten (34, 35) der Querschwingeinrichtung (21) an dem Querschlittenteil (56) derart angeordnet sind, dass deren Höhenausdehnung (107) in einem durch eine von den Unterseiten (108, 109) der voneinander beabstandet angeordneten Querschieneneinheiten (34, 35) aufgespannte untere fiktive Horizontalebene und durch eine von den Oberseiten (110, 111) der voneinander beabstandet angeordneten Querschieneneinheiten (34, 35) aufgespannte obere fiktive Horizontalebene begrenzten Bauraum (112) angeordnet sind.

6. Nutzfahrzeugsitz (1) nach einem der Ansprüche 1 bis 5,
**dadurch gekennzeichnet, dass**
ein elastisch umlenkbares und ausschließlich auf Zug Betätigungskräfte übertragbares Betätigungselement (69) federvorgespannt angeordnet ist, wobei insbesondere dieses auf Zug Betätigungskräfte übertragbare Betätigungselement (69) durch ein federvorgespanntes Umlenkelement (84) eines handbetätigbaren Betätigungshandgriffs (38) vorgespannt angeordnet ist.

7. Nutzfahrzeugsitz (1) nach einem der Ansprüche 1 bis 6,
**dadurch gekennzeichnet, dass**
die Vertikalschwenkachsen (63, 64) der zwei Verriegelungselemente (65, 66) gemeinsam in einer sich in Fahrzeuglängsrichtung (55) erstreckenden Vertikalebene (67) angeordnet sind.

8. Nutzfahrzeugsitz (1) nach einem der Ansprüche 1 bis 7,
**dadurch gekennzeichnet, dass**
jedes der Verriegelungselemente (65, 66) federvorgespannt an dem Querschlittenteil (56) in Richtung einer Verriegelungsposition (75) wirkend angeordnet ist.

9. Nutzfahrzeugsitz (1) nach einem der Ansprüche 1 bis 8,
**dadurch gekennzeichnet, dass**
die Verriegelungselemente (65, 66) jeweils einen flachen Grundkörper (70) aufweisen, an welchem eine Materialausnehmung (72) zum Einrasten an einem Verriegelungsbolzenelement (73, 74) der Verriegelungseinrichtung (60) vorgesehen ist, wobei die Materialausnehmung (72) an einer Langseite (71) des Grundkörpers (70) angeordnet ist, welche einer durch das Betätigungselement (69) definierten Anlenkseite (78) des Grundkörpers (70) gegenüberliegt.

10. Nutzfahrzeugsitz (1) nach einem der Ansprüche 1 bis 9,
**dadurch gekennzeichnet, dass**
jeder der Verriegelungseinheiten (61, 62) ein Verriegelungsbolzenelement (65, 66) zugeordnet ist, welches an dem Basisträgerteil (33) angeordnet ist.

11. Nutzfahrzeugsitz (1) mit einem Sitzteil (2), mit einem Rückenlehnenteil (3) und mit einem Sitzunterbau (7) zum Anordnen an einem Karosserieteil (8) eines Nutzfahrzeugs, bei welchem der Sitzunterbau (7) eine Querschwingeinrichtung (21) mit einem quer zu der Nutzfahrzeuglängserstreckung (55) schwingbaren Querschlittenteil (56), mittels welchem zumindest das Sitzteil (2) quer zur Fahrrichtung (5) schwingbar an einem Basisträgerteil (33) des Sitzunterbaus (7) gelagert ist, und eine Verriegelungseinrichtung (60) zum Festlegen des Querschlittenteils (56) an dem Basisträgerteil (33) umfasst, wobei die Verriegelungseinrichtung (60) zwei in Nutzfahrzeuglängserstreckung (55) voneinander beabstandet angeordnete Verriegelungseinheiten (61, 62) mit jeweils einem Verriegelungselement (65, 66) aufweist, **dadurch gekennzeichnet, dass** jeweils das Verriegelungselement (65, 66) entlang einer Linearachse verschieblich gelagert ist, welche synchron betätigbar in einer Horizontalebene (68) zwischen zwei Querschieneneinheiten (34, 35) der Querschwingeinrichtung (21) angeordnet sind.

## Claims

1. Commercial vehicle seat (1), comprising a seat part (2), a backrest part (3) and a seat substructure (7) for arrangement on a body part (8) of a commercial vehicle, the seat substructure (7) comprising a transverse oscillation device (21) having a cross slide part (56) which is capable of oscillating transversely to the longitudinal extension (55) of the commercial vehicle and by means of which at least the seat part (2) is mounted so as to oscillate transversely to the direction of travel (5) on a base carrier part (33) of the seat substructure (7), and comprising a locking device (60) for fixing the cross slide part (56) to the base carrier part (33), the locking device (60) comprising two locking units (61, 62) which are mutually spaced in the longitudinal extension (55) of the commercial vehicle and have respective locking elements (65, 66),
**characterised in that**
the locking elements (65, 66) are each mounted so as to be pivotable about one vertical pivot axis (63, 64), respectively, and are arranged so as to be synchronously actuatable in a horizontal plane (68) between two transverse rail units (34, 35) of the transverse oscillation device (21).

2. Commercial vehicle seat (1) according to claim 1,
**characterised in that**
each of the locking elements (65, 66) is hingedly arranged on the cross slide part (56) by means of a resiliently deflectable operating element (69) that transfers operating forces only when tensioned.

3. Commercial vehicle seat (1) according to either claim 1 or claim 2,
**characterised in that**
the two locking elements (65, 66) are operatively interconnected by a single continuous Bowden cable element (81) which is deflected around a deflecting element (84) of a manual operating handle (38).

4. Commercial vehicle seat (1) according to any of claims 1 to 3,
**characterised in that**
the locking elements (65, 66), a resiliently deflectable operating element (69) that can be operatively connected to said locking elements (65, 66), deflecting elements (83, 84) of a deflecting device (82), and a manual operating handle (38) are arranged in a common horizontal plane (68).

5. Commercial vehicle seat (1) according to any of claims 1 to 4,
**characterised in that**
the locking elements (65, 66) are arranged on the cross slide part (56) between two transverse rail units (34, 35) of the transverse oscillation device (21) in such a way that the height extension (107) of said locking elements is arranged in an installation space (112) delimited by a lower imaginary horizontal plane spanned by the undersides (108, 109) of the mutually spaced transverse rail units (34, 35) and by an upper imaginary horizontal plane spanned by the upper sides (110, 111) of the mutually spaced transverse rail units (34, 35).

6. Commercial vehicle seat (1) according to any of claims 1 to 5,
**characterised in that**
a resiliently deflectable operating element (69) that transfers operating forces only when tensioned is spring-biased, this operating element (69) that transfers operating forces when tensioned in particular being spring-biased by a spring-biased deflecting element (84) of a manual operating handle (38).

7. Commercial vehicle seat (1) according to any of claims 1 to 6,
**characterised in that**
the vertical pivot axes (63, 64) of the two locking elements (65, 66) are arranged together in a vertical plane (67) extending in the longitudinal direction (55) of the vehicle.

8. Commercial vehicle seat (1) according to any of claims 1 to 7,
**characterised in that**
each of the locking elements (65, 66) is spring-biased on the cross slide part (56) so as to act in the direction of a locked position (75).

9. Commercial vehicle seat (1) according to any of claims 1 to 8,
**characterised in that**
the locking elements (65, 66) each have a planar main body (70) on which a material recess (72) for engagement on a locking bolt element (73, 74) of the locking device (60) is provided, the material recess (72) being arranged on a long side (71) of the main body (70) that is opposite a coupling side (78) of the main body (70) defined by the operating element (69).

10. Commercial vehicle seat (1) according to any of claims 1 to 9,
**characterised in that**
each of the locking units (61, 62) is assigned to a locking bolt element (65, 66) which is arranged on the base carrier part (33).

11. Commercial vehicle seat (1), comprising a seat part (2), a backrest part (3) and a seat substructure (7) for arrangement on a body part (8) of a commercial vehicle, the seat substructure (7) comprising a transverse oscillation device (21) having a cross slide part (56) which is capable of oscillating transversely to the longitudinal extension (55) of the commercial vehicle and by means of which at least the seat part (2) is mounted so as to oscillate transversely to the direction of travel (5) on a base carrier part (33) of the seat substructure (7), and comprising a locking device (60) for fixing the cross slide part (56) to the base carrier part (33), the locking device (60) comprising two locking units (61, 62) which are mutually spaced in the longitudinal extension (55) of the commercial vehicle and have respective locking elements (65, 66),
**characterised in that**
the locking elements (65, 66) are each mounted so as to be movable along a linear axis, and are arranged so as to be synchronously actuatable in a horizontal plane (68) between two transverse rail units (34, 35) of the transverse oscillation device (21).

## Revendications

1. Siège de véhicule utilitaire (1) ayant une partie siège (2), ayant une partie dossier (3) et ayant une sous-structure de siège (7) pour la disposition sur une partie carrosserie (8) d'un véhicule utilitaire, dans lequel la sous-structure de siège (7) comporte un dispositif d'oscillation transversale avec une partie coulisseau transversal (56) oscillant transversalement à l'étendue longitudinale (55) du véhicule utilitaire, au moyen de laquelle au moins la partie siège (2) est montée sur une partie support de base (33) de la sous-structure de siège (7) en étant apte à osciller transversalement à la direction de déplacement (5), et un dispositif de verrouillage (60) pour la fixation de la partie coulisseau transversal (56) sur la partie support de base (33), le dispositif de verrouillage (60) présentant deux unités de verrouillage (61, 62) disposées à distance l'une de l'autre dans l'étendue longitudinale (55) du véhicule utilitaire, ayant respectivement un élément de verrouillage (65, 66),
**caractérisé par le fait que**
chacun des éléments de verrouillage (65, 66) est monté pivotant autour d'un axe de pivotement vertical (63, 64), lesquels éléments de verrouillage sont disposés entre deux unités de rail transversal (34, 35) du dispositif d'oscillation transversale (21) dans un plan horizontal (68) actionnables de façon synchrone.

2. Siège de véhicule utilitaire (1) selon la revendication 1,
**caractérisé par le fait que**
chacun des éléments de verrouillage (65, 66) est disposé sur la partie coulisseau transversal (56), articulable par un élément d'actionnement (69) apte à être dévié élastiquement et apte à transmettre des forces d'actionnement exclusivement en traction.

3. Siège de véhicule utilitaire (1) selon l'une des revendications 1 ou 2,
**caractérisé par le fait que**
les deux éléments de verrouillage (65, 66) sont reliés fonctionnellement l'un à l'autre par un élément câble (81) continu unique dévié autour d'un élément déflecteur (84) d'une poignée d'actionnement (38) actionnable manuellement.

4. Siège de véhicule utilitaire (1) selon l'une des revendications 1 à 3,
**caractérisé par le fait que**
les éléments de verrouillage (65, 66), un élément d'actionnement (69) apte à être dévié élastiquement apte à être relié fonctionnellement à ces éléments de verrouillage (65, 66), des éléments déflecteurs (83, 84) d'un dispositif déflecteur (82) et une poignée d'actionnement (38) actionnable manuellement sont disposés dans un plan horizontal commun (68).

5. Siège de véhicule utilitaire (1) selon l'une des revendications 1 à 4,
**caractérisé par le fait que**
les éléments de verrouillage (65, 66) sont disposés sur la partie coulisseau transversal (56) entre deux unités de rail transversal (34, 35) du dispositif d'oscillation transversale de telle sorte que leur étendue en hauteur (107) est disposée dans un espace de construction (112) limité par un plan horizontal fictif inférieur s'étendant à partir des côtés inférieurs (108, 109) des unités de rail transversal (34, 35) disposées à distance l'une de l'autre et par un plan horizontal fictif supérieur s'étendant à partir des côtés supérieurs (110, 111) des unités de rail transversal (34, 35) disposées à distance l'une de l'autre.

6. Siège de véhicule utilitaire (1) selon l'une des revendications 1 à 5,
**caractérisé par le fait que**
un élément d'actionnement (69) apte à être dévié élastiquement et apte à transmettre des forces d'actionnement exclusivement en traction est disposé précontraint par un ressort, en particulier cet élément d'actionnement (69) apte à transmettre des forces d'actionnement en traction étant disposé précontraint par un élément déflecteur (84), précontraint par un ressort, d'une poignée d'actionnement (38) actionnable manuellement.

7. Siège de véhicule utilitaire (1) selon l'une des revendications 1 à 6,
**caractérisé par le fait que**
les axes de pivotement vertical (63, 64) des deux éléments de verrouillage (65, 66) sont disposés conjointement dans un plan vertical (67) s'étendant dans la direction longitudinale (55) du véhicule.

8. Siège de véhicule utilitaire (1) selon l'une des revendications 1 à 7,
**caractérisé par le fait que**
chacun des éléments de verrouillage (65, 66) est disposé agissant dans la direction d'une position de verrouillage (75) sur la partie coulisseau transversal (56), précontraint par un ressort.

9. Siège de véhicule utilitaire (1) selon l'une des revendications 1 à 8,
**caractérisé par le fait que**
les éléments de verrouillage (65, 66) présentent chacun un corps principal plat (70), sur lequel un évidement de matière (72) est prévu pour l'encliquetage sur un élément boulon de verrouillage (73, 74) du dispositif de verrouillage (60), l'évidement de matière (72) étant disposé sur un côté long (71) du corps principal (70), lequel côté long fait face à un côté d'articulation (78) du corps principal (70) défini par l'élément d'actionnement (69).

10. Siège de véhicule utilitaire (1) selon l'une des revendications 1 à 9,
**caractérisé par le fait que**
chacune des unités de verrouillage (61, 62) est associée à un élément boulon de verrouillage (65, 66), lequel est disposé sur la partie support de base (33).

11. Siège de véhicule utilitaire (1) ayant une partie siège (2), ayant une partie dossier (3) et ayant une sous-structure de siège (7) pour la disposition sur une partie carrosserie (8) d'un véhicule utilitaire, dans lequel la sous-structure de siège (7) comporte un dispositif d'oscillation transversale (21) ayant une partie coulisseau transversal (56) oscillant transversalement à l'étendue longitudinale (55) du véhicule utilitaire, au moyen de laquelle au moins la partie siège (2) est montée sur une partie support de base (33) de la sous-structure de siège (7) en étant apte à osciller transversalement par rapport à la direction de déplacement (5), et un dispositif de verrouillage (60) pour la fixation de la partie coulisseau transversal (56) sur la partie support de base (33), le dispositif de verrouillage (60) présentant deux unités de verrouillage (61, 62) disposées à distance l'une de l'autre dans l'étendue longitudinale (55) du véhicule utilitaire, ayant un élément de verrouillage respectif (65, 66),
**caractérisé par le fait que**
chaque élément de verrouillage (65, 66) est monté déplaçable le long d'un axe linéaire, lesquels éléments de verrouillage sont disposés entre deux unités de rail transversal (34, 35) du dispositif d'oscillation transversale (21) dans un plan horizontal (68), actionnables de façon synchrone.
